# FASCICULE DE BREVET EUROPEEN

(11) **EP 2 613 990 B1**
(45) Date de publication et mention de la délivrance du brevet: **06.04.2016**
(21) Numéro de dépôt: 11773031.7
(22) Date de dépôt: 05.09.2011
(51) Int. Cl.: B60T 17/22, F16L 27/093, F16L 41/00, F16L 55/07, F15B 21/04

(54) **SYSTÈME DE PURGE**
AUSSPRITZANLAGE
PURGE SYSTEM

(30) Priorité: 08.09.2010 FR 1057118
(43) Date de publication de la demande: 17.07.2013
(73) Titulaire: Airbus Operations SAS, 31060 Toulouse (FR)
(72) Inventeur: RODRIGUES-MORGADO, Cédric, F-31200 Toulouse (FR)
(74) Mandataire: Fantin, Laurent
(86) Numéro de dépôt international: PCT/FR2011/052025
(87) Numéro de publication internationale: WO 2012/032254

(56) Documents cités:
- EP-A1- 1 122 139
- WO-A1-2010/091896
- FR-A1- 2 933 763
- US-A- 2 256 516
- US-A- 3 384 394
- US-A- 4 626 006
- US-A- 4 672 998

## Description

La présente invention se rapporte à un dispositif de connexion à un système de purge, plus particulièrement à une vis de purge d'un circuit de freinage d'aéronef. Lors des opérations de maintenance, les circuits de freinage d'un aéronef doivent être testés. Certaines portions du circuit, notamment les réservoirs de liquide de frein (également appelés bâches), doivent être purgées.

L'opération de purge consiste à évacuer l'air du circuit.

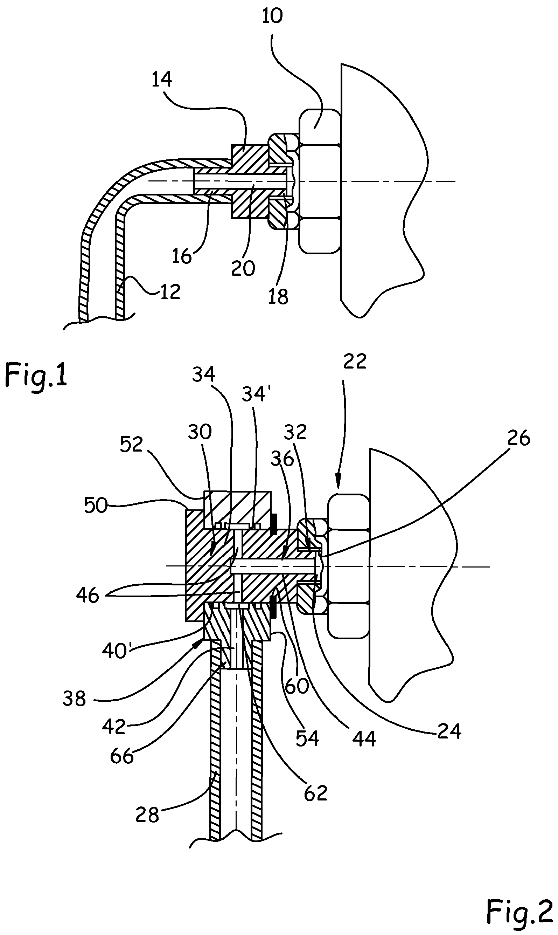

A cet effet, les portions à purger comprennent chacune au moins un système de purge 10 auquel on peut connecter un tuyau 12 souple transparent, comme illustré sur la figure 1.

Ainsi, l'opération de purge consiste à connecter le tuyau 12, à ouvrir le système de purge 10, à contrôler l'écoulement du liquide de frein dans le tuyau 12 et des éventuelles bulles d'air, puis à refermer le système de purge 10 lorsque le liquide de frein circulant à l'intérieur du tuyau 12 ne présente plus de bulles d'air.

Le tuyau 12 souple permet de collecter le liquide de frein et de visualiser la présence ou non de bulles d'air grâce à sa transparence.

Pour se connecter au système de purge, le tuyau comprend à une de ses extrémités un embout 14 rigide comportant d'une part une première portée 16 sur laquelle peut s'emmancher le tuyau 12, et d'autre part, un alésage fileté 18 (ou une seconde portée filetée) pour se visser au système de purge, la première portée 16 et l'alésage 18 (ou la seconde portée) étant relié par un conduit 20, sensiblement coaxial et fixe l'un par rapport à l'autre.

Grâce à sa souplesse, le tuyau peut se faufiler entre les différents éléments présents dans l'environnement du système de purge.

Grâce à sa souplesse, le tuyau peut se faufiler entre les différents éléments présents dans l'environnement du système de purge.

Toutefois, lorsque l'espace au droit du système de purge est trop restreint, le tuyau peut se plier et un pincement de la section d'écoulement peut apparaître au droit de ce pli. Ce pincement limite l'écoulement du liquide de frein ce qui tend à augmenter le temps de la purge et provoque une émulsion du liquide de frein qui rend plus délicat le contrôle visuel de la présence de bulles d'air dans le liquide de frein.

Selon une autre contrainte, il est nécessaire que le dispositif de connexion soit bien serré afin de limiter les risques d'une prise d'air entre le conduit débouchant et les dispositif de connexion.

Le document US-4.672.998, correspondant au préambule de la revendication indépendante, décrit un dispositif de connexion à un système hydraulique qui comprend une partie centrale avec une portée cylindrique et une partie annulaire avec un alésage pivotant sur la portée cylindrique de la partie centrale. Cette solution permet de dévier l'écoulement à 90° sans risque de pincement d'un tuyau. Ce dispositif de connexion est relié au système hydraulique par un raccord qui comprend une bague moletée. Ce type de raccordement n'est pas satisfaisant car il ne limite pas les risques d'une prise d'air.

Aussi, la présente invention propose un système de purge comportant un conduit débouchant et en amont une commande permettant ou non l'écoulement du fluide hydraulique vers ledit conduit débouchant, ladite commande ayant une section manoeuvrable avec un outil donné, ledit système de purge comprenant un dispositif de connexion démontable comportant :
- des moyens de raccordement aptes à être raccordés au système de purge,
- une sortie apte à être reliée à un tuyau,
- une première partie centrale comprenant lesdits moyens de raccordement, une portée cylindrique et un conduit s'étendant depuis les moyens de raccordement jusqu'au niveau de la surface de la portée cylindrique,
- une seconde partie annulaire comportant un alésage adapté pour pivoter sur la portée cylindrique, au moins un conduit reliant la sortie et la surface de l'alésage, la partie centrale et/ou la partie annulaire comportant une
gorge assurant l'écoulement du fluide hydraulique entre les conduits, caractérisé en ce que la partie centrale du dispositif de connexion comprend une section pour assurer le raccordement dudit dispositif de connexion au système de purge disposée entre les moyens de raccordement et la portée cylindrique et en ce que la section a la même forme que la section de la commande du système de purge pour assurer le raccordement dudit dispositif de connexion au système de purge à l'aide du même outil que celui utilisé pour provoquer l'ouverture ou la fermeture du système de purge. Le dispositif de connexion permet d'orienter le tuyau à 90° par rapport à la sortie du système de purge ce qui limite les risques de pincement du tuyau même dans le cas d'un espace restreint. De plus, la partie annulaire pouvant pivoter par rapport à la partie centrale, il est possible d'orienter le tuyau vers une zone accessible et/ou peu encombrée.

D'autres caractéristiques et avantages ressortiront de la description qui va suivre de l'invention, description donnée à titre d'exemple uniquement, en regard des dessins annexés sur lesquels :
- la figure 1 est une coupe d'un dispositif de connexion selon l'art antérieur,
- la figure 2 est une coupe d'un dispositif de connexion selon l'invention,
- la figure 3 est une vue latérale d'un dispositif de connexion selon l'invention,
- la figure 4 est une vue en perspective d'une première partie dite centrale du dispositif de connexion selon une variante de l'invention,
- la figure 5 est une vue en perspective d'une deuxième partie dite annulaire du dispositif de connexion selon une variante de l'invention, et
- la figure 6 est une vue en perspective de l'extrémité d'un tuyau.

Pour pouvoir être purgé, un circuit hydraulique comprend au moins un système de purge, appelé par la suite vis de purge 22.

A titre d'exemple, une vis de purge 22 est prévue au niveau du réservoir hydraulique d'un circuit de freinage d'un aéronef. L'invention n'est pas limitée à cette application et peut convenir à d'autres circuits hydrauliques.

Une vis de purge 22 comprend un conduit débouchant 24 et en amont une commande permettant ou non l'écoulement du fluide hydraulique vers le conduit débouchant. Elle comprend également des moyens de raccordement 26, un alésage fileté ou une portée filetée par exemple, coaxiaux au conduit débouchant 24.

La vanne et les moyens de raccordement ne sont pas plus décrits car ils sont connus de l'homme du métier et peuvent avoir différentes configurations.

Pour collecter le fluide hydraulique lors d'une opération de purge, on peut utiliser un outillage de purge comportant un tuyau 28 et un dispositif de connexion pour assurer la liaison entre le tuyau 28 et la vis de purge 22.

Le tuyau 28 est souple et transparent. Le tuyau 28 n'est pas plus décrit car il est connu de l'homme du métier et d'autres solutions pourraient être envisagées pour canaliser le fluide hydraulique s'échappant de la vis de purge.

Le dispositif de connexion comprend deux parties.

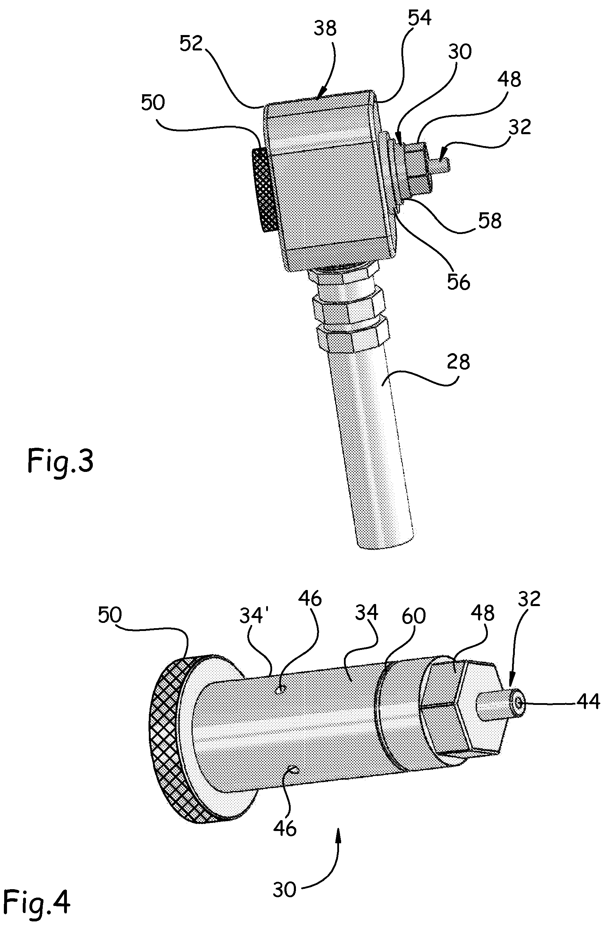

La première partie dite centrale 30 (visible sur la figure 3) comprend des moyens de raccordement 32, une portée cylindrique 34, au moins un conduit 36 s'étendant depuis les moyens de raccordement 32 jusqu'au niveau de la surface 34' de la portée cylindrique 34 (cette surface 34' correspondant à la surface extérieure d'une portion de la partie centrale 30).

La seconde partie dite annulaire 38 (visible sur la figure 4) comporte un alésage 40 adapté pour pivoter sur la portée cylindrique 34, une sortie au niveau de la surface extérieure de la partie annulaire 38 et au moins un conduit 42 reliant la sortie et la surface 40' de l'alésage 40 en regard de la portée cylindrique 34, la partie centrale 30 et/ou la partie annulaire 38 comportant une gorge 62 assurant l'écoulement du fluide hydraulique entre les conduits 36 et 42 même si les conduits 36 et 40 ne sont pas alignés.

De préférence, la gorge 62 s'étend sur toute la périphérie de la partie centrale 30 et/ou de la partie annulaire 38 de manière à assurer l'écoulement du fluide hydraulique quelle que soit la position angulaire relative de la partie annulaire 38 par rapport à la partie centrale 30.

Selon un mode de réalisation, la partie centrale 30 a une forme de révolution, avec à une extrémité des moyens de raccordement 32 à la vis de purge 22 sous la forme d'une portion cylindrique (avec un diamètre inférieur à celui de la portée 34) filetée coopérant avec les moyens de raccordement 26 de la vis de purge.

Le conduit 36 comprend d'une part, un premier tronçon 44 coaxial à la portion cylindrique des moyens de raccordement 32 et la portée 34, débouchant au niveau des moyens de raccordement 32, et d'autre part, plusieurs canaux radiaux 46 qui s'étendent depuis le tronçon 44 coaxial jusqu'à la surface 34' de la portée 34.

De préférence, la partie centrale 30 comprend quatre canaux radiaux 46 disposés dans un plan perpendiculaire à l'axe du tronçon coaxial 44, formant entre eux des angles de 90°.

La partie centrale 30 comprend également des moyens de manoeuvre pour assurer son raccordement à la vis de purge 22.

Selon l'invention, la partie centrale 30 comprend entre les moyens de raccordement 32 et la portée 34, une section 48, de préférence hexagonale, de même forme que la section de la commande de l'ouverture ou de la fermeture de la vis de purge 22 et permettant un vissage à l'aide du même outil que celui utilisé pour provoquer l'ouverture ou la fermeture de la vis de purge. Selon un mode de réalisation, la partie centrale 30 comprend au niveau de sa seconde extrémité (à l'opposé des moyens de raccordement 32) une collerette 50 avec une périphérie moletée. La collerette 50 moletée permet un vissage à la main des moyens de raccordement.

Le serrage à l'aide d'un outil en utilisant la section 48 permet dans un volume restreint de serrer efficacement les moyens de raccordement 32 afin de limiter les risques de prise d'air entre lesdits moyens de raccordement 32 et les moyens de raccordement 26. Dans le cas contraire, une prise d'air pourrait perturber l'opération de purge.

Selon un mode de réalisation, la partie annulaire 38 comprend à chaque extrémité des faces plates perpendiculaires à l'axe de l'alésage 40, une première face 52 prenant appui contre la collerette 50, la deuxième face 54 prenant appui contre une rondelle 56 et/ou un circlips 58 immobilisé selon une direction parallèle à l'axe de l'alésage 40 dans une gorge 60 ménagée en périphérie de la partie centrale 30. D'autres moyens pourraient être utilisés pour immobiliser selon la direction longitudinale (coaxial à la direction de l'axe de la portée 34, de l'alésage 40) la partie annulaire 38 par rapport à la partie centrale 30.

Les canaux radiaux 46 débouchent au niveau de la surface 34' de la portée 34 en regard d'une gorge périphérique 62 ménagée au niveau de l'alésage 40 de la partie annulaire.

Des moyens d'étanchéité 64 sont intercalés entre la partie centrale 30 et la partie annulaire 38, plus précisément entre la surface 34' de la portée cylindrique 34 et la surface 40' de l'alésage 40, de part et d'autre de la gorge périphérique 62. Selon un mode de réalisation, ces moyens d'étanchéité 64 se présentent sous la forme de deux joints toriques qui se logent dans des rainures prévues de part et d'autre de la gorge périphérique 62.

Le conduit 42 de la partie annulaire 38 est disposé dans un plan perpendiculaire à l'axe longitudinal.

La sortie de la partie annulaire 38 est connectée au tuyau 28.

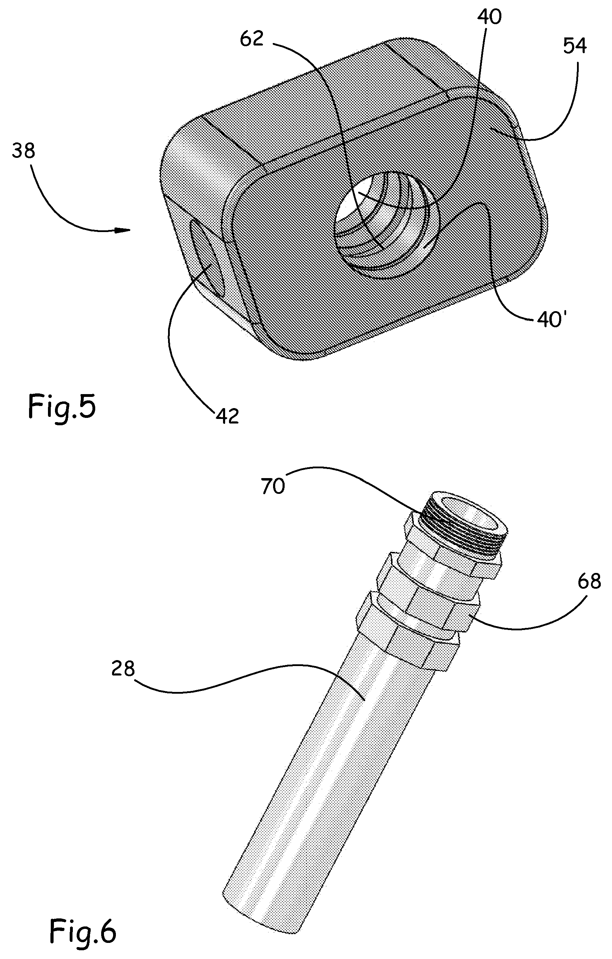

Selon un mode de réalisation illustré sur la figure 2, la partie annulaire 38 comprend au droit de la sortie un tube 66, perpendiculaire à l'axe longitudinal dans le prolongement du conduit 42, sur lequel peut s'emmancher le tuyau 28. Selon un mode de réalisation illustré sur les figures 3 et 6, le tuyau 28 comprend un raccord 68 avec à une première extrémité une portée sur laquelle est emmanché le tuyau 28 et à une seconde extrémité une portion filetée 70 susceptible de se visser dans un filetage ménagé au niveau de la portion débouchante du conduit 42.

## Revendications

1. Système de purge (22) comportant un conduit débouchant (24) et en amont une commande permettant ou non l'écoulement du fluide hydraulique vers ledit conduit débouchant (24), ladite commande ayant une section manoeuvrable avec un outil donné, ledit système de purge comprenant un dispositif de connexion démontable comportant :
- des moyens de raccordement (32) aptes à être raccordés au système de purge,
- une sortie apte à être reliée à un tuyau (28),
- une première partie centrale (30) comprenant lesdits moyens de raccordement (32), une portée cylindrique (34) et un conduit (36) s'étendant depuis les moyens de raccordement (32) jusqu'au niveau de la surface (34') de la portée cylindrique (34),
- une seconde partie annulaire (38) comportant un alésage (40) adapté pour pivoter sur la portée cylindrique (34), au moins un conduit (42) reliant la sortie et la surface (40') de l'alésage (40), la partie centrale (30) et/ou la partie annulaire (38) comportant une gorge (62) assurant l'écoulement du fluide hydraulique entre les conduits (36,42),
**caractérisé en ce que** la partie centrale (30) du dispositif de connexion comprend une section (48) pour assurer le raccordement dudit dispositif de connexion au système de purge (22) disposée entre les moyens de raccordement (32) et la portée cylindrique (34) et **en ce que** la section (48) a la même forme que la section de la commande du système de purge (22) pour assurer le raccordement dudit dispositif de connexion au système de purge (22) à l'aide du même outil que celui utilisé pour provoquer l'ouverture ou la fermeture du système de purge.

2. Système de purge selon la revendication 1 **caractérisé en ce que** la section (48) a une forme hexagonale.

3. Système de purge selon l'une quelconque des revendications précédentes, **caractérisé en ce que** la partie centrale (30) comprend une collerette (50) avec une périphérie moletée.

4. Système de purge selon l'une quelconque des revendications précédentes, **caractérisé en ce que** le conduit (36) comprend d'une part, un premier tronçon (44) coaxial à la portée (34), débouchant au niveau des moyens de raccordement (32), et d'autre part, plusieurs canaux radiaux (46) qui s'étendent depuis le tronçon (44) coaxial jusqu'à la surface (34') extérieure de la partie centrale (30).

5. Système de purge selon l'une quelconque des revendications précédentes, **caractérisé en ce que** la partie annulaire (38) comprend une gorge périphérique (62) ménagée au niveau de la surface (40') de l'alésage (40).

6. Système de purge selon l'une quelconque des revendications précédentes, **caractérisé en ce que** la partie annulaire (38) comprend un filetage ménagé au niveau de la portion débouchante du conduit (42) pour raccorder un tuyau (28).

7. Système de purge selon l'une quelconque des revendications précédentes, **caractérisé en ce qu'**il comprend un tuyau (28) relié au dispositif de connexion.

8. Système de purge selon les revendications 6 et 7, **caractérisé en ce que** le tuyau (28) comprend un raccord (68) avec à une première extrémité une portée sur laquelle est emmanché le tuyau (28) et à une seconde extrémité une portion filetée (70) susceptible de se visser dans le filetage ménagé au niveau de la portion débouchante du conduit (42).

## Patentansprüche

1. Entlüftungssystem (22) mit einer mündenden Leitung (24) und stromaufwärts mit einer Steuerung, die das Fließen von Druckflüssigkeit zur mündenden Leitung (24) gestattet oder nicht gestattet, wobei die Steuerung eine mit einem bestimmten Werkzeug betätigbaren Abschnitt aufweist, wobei das Lüftungssystem eine lösbare Verbindungsvorrichtung umfasst, mit:
- Anschlussmitteln (32), die dazu geeignet sind, an das Entlüftungssystem angeschlossen zu werden,
- einem Ausgang, der dazu geeignet ist, an ein Rohr (28) angeschlossen zu werden,
- einem ersten zentralen Teil (30), der die Anschlussmittel (32), eine zylindrische Erweiterung (34) und eine Leitung (36) umfasst, die sich von den Anschlussmitteln (32) bis in den Bereich der Oberfläche (34') der zylindrischen Erweiterung (34) erstreckt,
- einem zweiten ringförmigen Abschnitt (38) mit einer Ausnehmung (40), die dazu eingerichtet ist, auf der zylindrischen Erweiterung (34) verschwenkt zu werden, mit wenigstens einer Leitung (42), die den Ausgang und die Oberfläche (40') der Ausnehmung (40) verbindet, wobei der zentrale Teil (30) und/oder der ringförmige Teil (38) eine Vertiefung (62) aufweisen, die das Fließen der Druckflüssigkeit zwischen den Leitungen (36, 42) gewährleistet,
**dadurch gekennzeichnet, dass** der zentrale Teil (30) der Verbindungsvorrichtung einen Abschnitt (48) aufweist, um den Anschluss der Verbindungsvorrichtung an das Entlüftungssystem (22) zu gewährleisten, der zwischen den Anschlussmitteln (32) und der zylindrischen Erweiterung (34) angeordnet ist, und dass der Abschnitt (48) die gleiche Form wie der Steuerabschnitt des Entlüftungssystems (22) aufweist, um den Anschluss der Verbindungsvorrichtung an das Entlüftungssystem (22) mit Hilfe des gleichen Werkzeugs zu gewährleisten, das verwendet wird, um die Öffnung oder Schließung des Entlüftungssystems zu bewirken.

2. Entlüftungssystem nach Anspruch 1, **dadurch gekennzeichnet, dass** der Abschnitt (48) sechseckig ausgebildet ist.

3. Entlüftungssystem nach einem der vorhergehenden Ansprüche, **dadurch gekennzeichnet, dass** der zentrale Teil (30) einen Rändelgriff (50) mit einem geriffelten Umfang aufweist.

4. Entlüftungssystem nach einem der vorhergehenden Ansprüche, **dadurch gekennzeichnet, dass** die Leitung (36) einerseits einen zur Erweiterung (34) koaxialen Leitungsabschnitt (44) aufweist, der im Bereich der Anschlussmittel (32) mündet, und andererseits mehrere radiale Kanäle (46) aufweist, die sich vom koaxialen Leitungsabschnitt (44) bis zur äußeren Oberfläche (34') des zentralen Teils (30) erstrecken.

5. Entlüftungssystem nach einem der vorhergehenden Ansprüche, **dadurch gekennzeichnet, dass** der ringförmige Teil (38) eine umfängliche Vertiefung (62) aufweist, die im Bereich der Oberfläche (40') der Ausnehmung (40) vorgesehen ist.

6. Entlüftungssystem nach einem der vorhergehenden Ansprüche, **dadurch gekennzeichnet, dass** der ringförmige Teil (38) ein Gewinde aufweist, das im Bereich des Mündungsabschnitts der Leitung (42) für den Anschluss eines Rohres (28) ausgebildet ist.

7. Entlüftungssystem nach einem der vorhergehenden Ansprüche, **dadurch gekennzeichnet, dass** dieses ein Rohr (28) aufweist, das mit der Verbindungsvorrichtung verbunden ist.

8. Entlüftungssystem nach den Ansprüchen 6 und 7, **dadurch gekennzeichnet, dass** das Rohr (28) einen Anschluss (68) aufweist, der an einem ersten Ende eine Erweiterung umfasst, auf die das Rohr (28) aufgezogen ist, und der an einem zweiten Ende einen Gewindeabschnitt (70) umfasst, der dazu geeignet ist, in das im Bereich des Mündungsabschnitts der Leitung (42) ausgebildete Gewinde eingeschraubt zu werden.

## Claims

1. A bleeding system (22) comprising an open conduit (24) and, upstream, a control allowing the hydraulic fluid to flow, or not, toward said open conduit (24), said control having a section configured to be maneuvered with a tool, said bleeding system comprising a dismountable connection device comprising:
- connection means (32) adapted to be connected to the bleeding system;
- an outlet adapted to be connected to a pipe (28);
- a first central portion (30) comprising said connection means (32), a cylindrical bearing (34), and a conduit (36) extending from the connection means (32) up to the surface (34')of the cylindrical bearing (34);
- an annular second portion (38) comprising a bore (40) adapted to pivot on the cylindrical bearing (34), at least one conduit (42) connecting the outlet and the surface (40') of the bore (40), the central portion (30) and/or the annular portion (38) comprising a groove (62) ensuring the hydraulic fluid flows between the conduits (36,42),
**characterized in that** the central portion (30) of the connection device comprises a section (48) to ensure the connection of said connection device to the bleeding system (22) arranged between the connection means (32) and the cylindrical bearing (34)and **in that** the section (48) has the same shape as the section of the bleeding system control to ensure the connection of said connection device to the bleeding system (22) by the same tool as that used for opening or closing the bleeding system.

2. The bleeding system according to claim 1, wherein the section (48) has an hexagonal shape.

3. The bleeding system according to anyone of the preceding claims, wherein the central portion (30) comprises a flange (50)with a knurled periphery.

4. The bleeding system according to anyone of the preceding claims, wherein the conduit (36) comprises a first section (44) coaxial to the cylindrical bearing (34), opening out in the area of the connection means (32), and a plurality of radial channels (46) extending from the coaxial section (44) to the outer surface (34') of the central portion (30).

5. The bleeding system according to anyone of the preceding claims, wherein the annular portion (38) comprises a peripheral groove (62) housed in the area of the surface (40') of the bore (40).

6. The bleeding system according to anyone of the preceding claims, wherein the annular portion (38) comprises a threading housed in the area of the open portion of the conduit (42) to connect a pipe (28).

7. The bleeding system according to anyone of the preceding claims wherein it comprises a pipe (28) connected to the connection device.

8. The bleeding system according to claim 6 and 7, wherein the pipe (28) comprises a connector (68) with, at a first end, a cylindrical bearing onto which the pipe (28) is fitted and, at a second end, a threaded portion (70) configured to be screwed into the threading housed in the area of the open portion of the conduit (42).
